# EUROPEAN PATENT APPLICATION

(11) **EP 4 651 612 A1**
(43) Date of publication of application: **19.11.2025**
(21) Application number: 25174235.9
(22) Date of filing: 05.05.2025
(51) Int. Cl.: H04W 74/00, H04W 74/0816, H04W 84/12

(54) **TRANSMISSION OPPORTUNITY SHARING GROUP**

(30) Priority: 14.05.2024 GB 202406764
(71) Applicant: Nokia Technologies Oy, 02610 Espoo (FI)
(72) Inventor: DOPPLER, Klaus Franz, Albany (US); KASSLIN, Mika, Espoo (FI); MUTGAN, Orhan Okan, Munich (DE)
(74) Representative: Nokia EPO representatives

(57) **Abstract**

Embodiments of the present disclosure relate to devices, methods, apparatuses and medium for transmission opportunity (TXOP) sharing group. In an aspect, a network device transmits, to at least one second network device, a first announcement message notifying that a transmission opportunity, TXOP, of the network device can be shared. The network device and the at least one second network device are within one TXOP sharing group. The network device receives, from the at least one second network device, at least one first request message requesting to share the TXOP. The network device transmits, to the at least one second network device, at least one first response message granting or rejecting to share the TXOP. By implementing the embodiments of the present disclosure, a sharing network device could efficiently know with which other network device(s) it could share the TXOP based on the TXOP sharing group, thus improves transmission efficiency.

## Description

### FIELD

Various example embodiments generally relate to the field of communication, and in particular, to terminal devices, network devices, methods, apparatuses and a computer readable storage medium related to transmission opportunity (TXOP) sharing group.

### BACKGROUND

A communication network can be seen as a facility that enables communications between two or more communication devices, or provides communication devices access to a data network. A mobile or wireless communication network is one example of a communication network.

Such communication networks operate in accordance with standards, such as those promulgated by 3GPP (Third Generation Partnership Project), IEEE or ETSI (European Telecommunications Standards Institute). Examples of such standards include the so-called 5G (5th Generation) standard or other standards promulgated by 3GPP.

### SUMMARY

In general, example embodiments of the present disclosure provide terminal devices, network devices, methods, apparatuses and a computer readable storage medium for communication, for example, for TXOP sharing, especially for TXOP sharing based on a TXOP sharing group.

In a first aspect, there is provided a network device. The network device may comprise at least one processor; and at least one memory storing instructions that, when executed by the at least one processor, cause the network device at least to: transmit, to at least one second network device, a first announcement message notifying that a transmission opportunity, TXOP, of the network device can be shared, wherein the network device and the at least one second network device are within one TXOP sharing group; receive, from the at least one second network device, at least one first request message requesting to share the TXOP; and transmit, to the at least one second network device, at least one first response message granting or rejecting to share the TXOP.

In a second aspect, there is provided a network device. The network device may comprise at least one processor; and at least one memory storing instructions that, when executed by the at least one processor, cause the network device at least to: receive, from a second network device, a first announcement message notifying that a transmission opportunity, TXOP, of the second network device can be shared, wherein the network device and the second network device are within one TXOP sharing group; transmit, to the second network device, a first request message requesting to share the TXOP; and receive, from the second network device, a first response message granting or rejecting to share the TXOP.

In a third aspect, there is provided a method. The method may comprise: transmitting, to at least one second network device, a first announcement message notifying that a transmission opportunity, TXOP, of the network device can be shared, wherein the network device and the at least one second network device are within one TXOP sharing group; receiving, from the at least one second network device, at least one first request message requesting to share the TXOP; and transmitting, to the at least one second network device, at least one first response message granting or rejecting to share the TXOP.

In a fourth aspect, there is provided a method. The method may comprise: receiving, from a second network device, a first announcement message notifying that a transmission opportunity, TXOP, of the second network device can be shared, wherein the network device and the second network device are within one TXOP sharing group; transmitting, to the second network device, a first request message requesting to share the TXOP; and receiving, from the second network device, a first response message granting or rejecting to share the TXOP.

In a fifth aspect, there is provided an apparatus. The apparatus may comprise: means for transmitting, to at least one second network device, a first announcement message notifying that a transmission opportunity, TXOP, of the network device can be shared, wherein the network device and the at least one second network device are within one TXOP sharing group; means for receiving, from the at least one second network device, at least one first request message requesting to share the TXOP; and means for transmitting, to the at least one second network device, at least one first response message granting or rejecting to share the TXOP.

In a sixth aspect, there is provided an apparatus. The apparatus may comprise: means for receiving, from a second network device, a first announcement message notifying that a transmission opportunity, TXOP, of the second network device can be shared, wherein the network device and the second network device are within one TXOP sharing group; means for transmitting, to the second network device, a first request message requesting to share the TXOP; and means for receiving, from the second network device, a first response message granting or rejecting to share the TXOP.

In a seventh aspect, there is provided a non-transitory computer readable medium comprising program instructions for causing an apparatus to perform at least the method according to the third to fourth aspects.

In an eighth aspect, there is provided a computer program comprising instructions, which, when executed by an apparatus, cause the apparatus at least to: transmit, to at least one second network device, a first announcement message notifying that a transmission opportunity, TXOP, of the network device can be shared, wherein the network device and the at least one second network device are within one TXOP sharing group; receive, from the at least one second network device, at least one first request message requesting to share the TXOP; and transmit, to the at least one second network device, at least one first response message granting or rejecting to share the TXOP.

In a ninth aspect, there is provided a computer program comprising instructions, which, when executed by an apparatus, cause the apparatus at least to: receive, from a second network device, a first announcement message notifying that a transmission opportunity, TXOP, of the second network device can be shared, wherein the network device and the second network device are within one TXOP sharing group; transmit, to the second network device, a first request message requesting to share the TXOP; and receive, from the second network device, a first response message granting or rejecting to share the TXOP.

In a tenth aspect, there is provided a network device. The network device may comprise a transmitting circuitry configured to transmit, to at least one second network device, a first announcement message notifying that a transmission opportunity, TXOP, of the network device can be shared, wherein the network device and the at least one second network device are within one TXOP sharing group; a receiving circuitry configured to receive, from the at least one second network device, at least one first request message requesting to share the TXOP; and a transmitting circuitry configured to transmit, to the at least one second network device, at least one first response message granting or rejecting to share the TXOP.

In an eleventh aspect, there is provided a network device. The network device may comprise a receiving circuitry configured to receive, from a second network device, a first announcement message notifying that a transmission opportunity, TXOP, of the second network device can be shared, wherein the network device and the second network device are within one TXOP sharing group; a transmitting circuitry configured to transmit, to the second network device, a first request message requesting to share the TXOP; and a receiving circuitry configured to receive, from the second network device, a first response message granting or rejecting to share the TXOP.

In a twelfth aspect, there is provided a device. The device may comprise at least one processor; and at least one memory storing instructions that, when executed by the at least one processor, cause the device at least to: transmit, to at least one terminal device, a first announcement message notifying that a transmission opportunity, TXOP of the device can be shared, wherein the device and the at least one terminal device are within one TXOP sharing group, the at least one terminal device has low latency traffic; receive, from the at least one terminal device, at least one first request message requesting to share the TXOP; and transmit, to the at least one terminal device, at least one first response message granting or rejecting to share the TXOP.

In a thirteenth aspect, there is provided a terminal device. The terminal device may comprise at least one processor; and at least one memory storing instructions that, when executed by the at least one processor, cause the terminal device at least to: receive, from a device, a first announcement message notifying that a transmission opportunity, TXOP of the device can be shared, wherein the device and the terminal device are within one TXOP sharing group, and the terminal device has low latency traffic; transmit, to the device, a first request message requesting to share the TXOP; and receive, from the device, a first response message granting or rejecting to share the TXOP.

In a fourteenth aspect, there is provided a method. The method may comprise: transmitting, to at least one terminal device, a first announcement message notifying that a transmission opportunity, TXOP of the device can be shared, wherein the device and the at least one terminal device are within one TXOP sharing group, the at least one terminal device has low latency traffic; receiving, from the at least one terminal device, at least one first request message requesting to share the TXOP; and transmitting, to the at least one terminal device, at least one first response message granting or rejecting to share the TXOP.

In a fifteenth aspect, there is provided a method. The method may comprise: receiving, from a device, a first announcement message notifying that a transmission opportunity, TXOP of the device can be shared, wherein the device and the terminal device are within one TXOP sharing group, and the terminal device has low latency traffic; transmitting, to the device, a first request message requesting to share the TXOP; and receiving, from the device, a first response message granting or rejecting to share the TXOP.

In a sixteenth aspect, there is provided an apparatus. The apparatus may comprise: means for transmitting, to at least one terminal device, a first announcement message notifying that a transmission opportunity, TXOP of the device can be shared, wherein the device and the at least one terminal device are within one TXOP sharing group, the at least one terminal device has low latency traffic; means for receiving, from the at least one terminal device, at least one first request message requesting to share the TXOP; and means for transmitting, to the at least one terminal device, at least one first response message granting or rejecting to share the TXOP.

In a seventeenth aspect, there is provided an apparatus. The apparatus may comprise: means for receiving, from a device, a first announcement message notifying that a transmission opportunity, TXOP of the device can be shared, wherein the device and the terminal device are within one TXOP sharing group, and the terminal device has low latency traffic; means for transmitting, to the device, a first request message requesting to share the TXOP; and means for receiving, from the device, a first response message granting or rejecting to share the TXOP.

In an eighteenth aspect, there is provided a non-transitory computer readable medium comprising program instructions for causing an apparatus to perform at least the method according to the fourteenth or fifteenth aspect.

In a nineteenth aspect, there is provided a computer program comprising instructions, which, when executed by an apparatus, cause the apparatus at least to: transmit, to at least one terminal device, a first announcement message notifying that a transmission opportunity, TXOP of the device can be shared, wherein the device and the at least one terminal device are within one TXOP sharing group, the at least one terminal device has low latency traffic; receive, from the at least one terminal device, at least one first request message requesting to share the TXOP; and transmit, to the at least one terminal device, at least one first response message granting or rejecting to share the TXOP.

In a twentieth aspect, there is provided a computer program comprising instructions, which, when executed by an apparatus, cause the apparatus at least to: receive, from a device, a first announcement message notifying that a transmission opportunity, TXOP of the device can be shared, wherein the device and the terminal device are within one TXOP sharing group, and the terminal device has low latency traffic; transmit, to the device, a first request message requesting to share the TXOP; and receive, from the device, a first response message granting or rejecting to share the TXOP.

In a twenty-first aspect, there is provided a device. The device may comprise a transmitting circuitry configured to transmit, to at least one terminal device, a first announcement message notifying that a transmission opportunity, TXOP of the device can be shared, wherein the device and the at least one terminal device are within one TXOP sharing group, the at least one terminal device has low latency traffic; a receiving circuitry configured to receive, from the at least one terminal device, at least one first request message requesting to share the TXOP; and a transmitting circuitry configured to transmit, to the at least one terminal device, at least one first response message granting or rejecting to share the TXOP.

In a twenty-second aspect, there is provided a terminal device. The terminal device may comprise a receiving circuitry configured to receive, from a device, a first announcement message notifying that a transmission opportunity, TXOP of the device can be shared, wherein the device and the terminal device are within one TXOP sharing group, and the terminal device has low latency traffic; a transmitting circuitry configured to transmit, to the device, a first request message requesting to share the TXOP; and a receiving circuitry configured to receive, from the device, a first response message granting or rejecting to share the TXOP.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, in which:
FIG. 1 illustrates an example of an application scenario in which some example embodiments of the present disclosure may be implemented;
FIG. 2 illustrates an example signaling process for TXOP sharing based on a TXOP sharing group between a network device and another network device according to some embodiments of the present disclosure;
FIG. 3 illustrates an example signaling process for TXOP sharing based on a TXOP sharing group between a first access point, AP1, and a second access point, AP2, according to some embodiments of the present disclosure;
FIG. 4 illustrates an example structure of a multi-user request to send (MU-RTS) frame format for notifying a TXOP can be shared according to some embodiments of the present disclosure;
FIG. 5 illustrates an example signaling process for an access point (AP) requesting to join a TXOP sharing group according to some embodiments of the present disclosure;
FIG. 6 illustrates an example signaling process for TXOP sharing based on a TXOP sharing group among network device(s) and terminal device(s) according to some embodiments of the present disclosure;
FIG. 7 illustrates an example signaling process for TXOP sharing based on a TXOP sharing group among AP(s) and low latency station(s) (LL-STA(s)) according to some embodiments of the present disclosure;
FIG. 8 illustrates an example signaling process for a low latency station (LL-STA) requesting to join a TXOP sharing group according to some embodiments of the present disclosure;
FIG. 9 illustrates a flowchart of an example method implemented at a network device in accordance with some embodiments of the present disclosure;
FIG. 10 illustrates a flowchart of an example method implemented at a network device in accordance with some embodiments of the present disclosure;
FIG. 11 illustrates a flowchart of an example method implemented at a network device in accordance with some embodiments of the present disclosure;
FIG. 12 illustrates a flowchart of an example method implemented at a terminal device in accordance with some embodiments of the present disclosure;
FIG. 13 illustrates an example simplified block diagram of a device that is suitable for implementing embodiments of the present disclosure; and
FIG. 14 illustrates an example block diagram of an example computer readable medium in accordance with some example embodiments of the present disclosure.

Throughout the drawings, the same or similar reference numerals represent the same or similar element.

### DETAILED DESCRIPTION

Principles of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein may be implemented in various manners other than the ones described below.

In the following description and claims, unless defined otherwise, all technical and scientific terms used herein have the same meaning as commonly understood by one of ordinary skills in the art to which the present disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It may be understood that although the terms "first", "second", "third", "fourth" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s) that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as new radio (NR), long term evolution (LTE), LTE-advanced (LTE-A), wideband code division multiple access (WCDMA), high-speed packet access (HSPA), narrow band Internet of things (NB-IoT) and so on. Furthermore, the communications between a terminal device and a network device in the communication network may be performed according to any suitable generation communication protocols, including, but not limited to, the third generation (3G), the fourth generation (4G), 4.5G, the fifth generation (5G) communication protocols, the sixth generation (6G) communication protocols, and/or beyond. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NRNB (also referred to as a gNB), a transmit-receive point (TRP), a remote radio unit (RRU), a radio header (RH), a remote radio head (RRH), a relay, a low power node such as a femto, a pico, an Integrated Access and Backhaul (IAB) node, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a subscriber station (SS), a portable subscriber station, a mobile station (MS), or an access terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial, a relay node, an integrated access and backhaul (IAB) node, and/or industrial wireless networks, and the like. In the following description, the terms "terminal device", "communication device", "terminal", "user equipment" and "UE" may be used interchangeably.

As used herein, the term "resource", "transmission resource", "resource block", "physical resource block" (PRB), "uplink (UL) resource" or "downlink (DL) resource" may refer to any resource for performing a communication, for example, a communication between a terminal device and a network device, such as a resource in time domain, a resource in frequency domain, a resource in space domain, a resource in code domain, a resource in a combination of more than one domain or any other resource enabling a communication, and the like. In the following, a resource in time domain (such as, a subframe) will be used as an example of a transmission resource for describing some example embodiments of the present disclosure. It is noted that example embodiments of the present disclosure are equally applicable to other resources in other domains.

In a communication technology, one issue that needs to be concerned is the reduction of the latency for Wi-Fi stations (STA) to support applications such as Virtual Reality (VR), Mixed Reality (MR) and Augmented Reality (AR) which require a low latency connection. There are numerous applications requiring a low latency connection. Another example is an IoT sensor that reports events which requires low latency responses and the arrival of such events is not deterministic. IEEE 802.11be has introduced a concept of transmission opportunity (TXOP) sharing. It defines a multi-user request to send (MU-RTS) frame that allows an AP to share a TXOP. IEEE 802.11be defines a triggered TXOP sharing mode subfield. When the triggered TXOP sharing mode subfield has a value of "0", it indicates a MU-RTS that does not initiate triggered TXOP sharing procedure; when the triggered TXOP sharing mode subfield has a value of "1", it indicates a MU-RTS that initiates triggered TXOP sharing procedure wherein a scheduled STA can only transmit Message Protocol Data Unit(s) (MPDU(s)) addressed to its associated AP; when the triggered TXOP sharing mode subfield has a value of "2", it indicates a MU-RTS that initiates triggered TXOP sharing procedure wherein a scheduled STA can transmit MPDU(s) addressed to its associated AP or addressed to another STA; a value of "3" of the triggered TXOP sharing mode subfield is reserved. An MU-RTS triggered frame that has the triggered TXOP sharing mode subfield set to nonzero value is called as MU-RTS transmission trigger frame. In IEEE 802.11bn, it has been proposed to extend the triggered TXOP sharing mode from an STA associated with the sharing AP to another AP and discusses an MU-RTS transmission trigger frame can be used for a sharing AP to allocate a time duration to a single shared AP.

As can be seen, the existing TXOP sharing procedures only allow an AP (also called a sharing AP) to share a TXOP with another AP (also called as a shared AP) and assumes that the sharing AP sharing a TXOP knows to share the TXOP with which shared AP. A shared AP which has an STA with low latency traffic (e.g., in downlink) is to take over the TXOP. However, the shared APs having associated STAs with low latency uplink traffic may be unknown to the sharing AP. The sharing AP may not know which AP is selected for sharing the TXOP and the low latency STAs (LL-STAs) may not be able to transmit their uplink traffic or receive latency critical downlink traffic. The inventors of the present application consider that the question of how to render the sharing AP know with which other AP(s) it should share the TXOP. Additionally, the inventors of the present application consider that there might be a need for TXOP sharing between the AP and the LL-STA or TXOP sharing between the LL-STAs. Thus, how to render the sharing device (AP or LL-STA) know with which LL-STA to share the TXOP also needs to be studied.

Therefore, the present disclosure provides a concept of TXOP sharing group. Some example embodiments of the present disclosure provide a solution for sharing TXOP based on a TXOP sharing group between network devices. According to these embodiments of the present disclosure, a network device (e.g., a sharing AP) transmit, to at least one second network device (e.g., at least one shared AP), a first announcement message notifying that a transmission opportunity, TXOP, of the network device can be shared, wherein the network device and the at least one second network device are within one TXOP sharing group. Afterwards, the network device receives, from the at least one second network device, at least one first request message requesting to share the TXOP. Then, the network device transmits, to the at least one second network device, at least one first response message granting or rejecting to share the TXOP.

Some other example embodiments of the present disclosure provide a solution for sharing TXOP based on a TXOP sharing group among network device(s) and terminal device(s). According to these embodiments of the present disclosure, a device (e.g., a sharing AP or a sharing LL-STA) transmits, to at least one terminal device (e.g., a shared LL-STA), a first announcement message notifying that a transmission opportunity, TXOP of the device can be shared, wherein the device and the at least one terminal device are within one TXOP sharing group, the at least one terminal device has low latency traffic. Afterwards, the device receives, from the at least one terminal device, at least one first request message requesting to share the TXOP. Then, the device transmits, to the at least one terminal device, at least one first response message granting or rejecting to share the TXOP.

It is understood that the above procedure steps may work together, in a flow of operations as described below, partly together or independently of each other. By implementing the embodiments of the present disclosure, a sharing AP could efficiently know sharing the TXOP with which other AP(s) or LL-STAs based on the TXOP sharing group, and a sharing LL-STA also could efficiently know sharing the TXOP with which AP(s) or other LL-STAs based on the TXOP sharing group, enhancing the using of the TXOP and improving transmission efficiency.

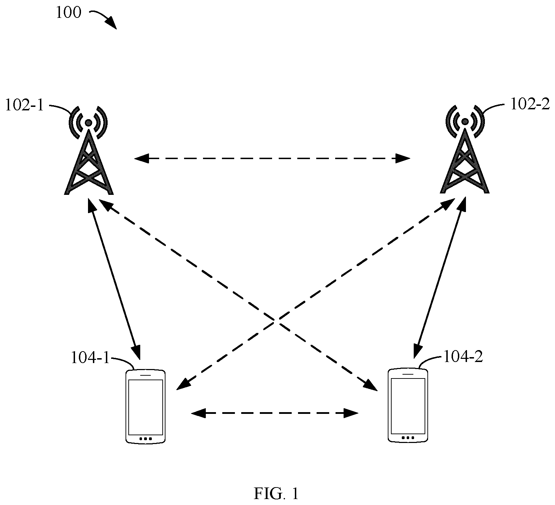

For illustrative purposes, principles and example embodiments of the present disclosure of event triggered beam reporting will be described below with reference to FIG. 1 through FIG. 14. However, it is to be noted that these embodiments are given to enable the skilled in the art to understand inventive concepts of the present disclosure and implement the solution as proposed herein, and not intended to limit scope of the present application in any way.

FIG. 1 illustrates an example of an application scenario 100 in which some example embodiments of the present disclosure may be implemented. The network environment 100, which may be a part of a communication network, includes a network device 102-1, a network device 102-2, a terminal device 104-1 and a terminal device 104-2. The terminal device 104-1 and the terminal device 104-2 may have low latency traffic. The network device 102-1 may be associated with the terminal device 104-1 and the network device 102-2 may be associated with the terminal device 104-2. The network devices 102-1 and 102-2 could be collectively called as the network device 102, and the terminal devices 104-1 and 104-2 could be collectively called as the terminal device 104.

As illustrated in FIG. 1, The network device 102 may also be referred to as an AP or a TRP, and the terminal device 104 may also be referred to as a user equipment 104 or a UE 104. The network device 102-1 can perform uplink/downlink transmission to/from the terminal device 104-1, and the network device 102-2 can perform uplink/downlink transmission to/from the terminal device 104-2. The network device 102-1 may be a TXOP sharing AP, which can share a TXOP with the network device 102-2 associated with the low latency terminal device 104-2 or share a TXOP with the low latency terminal device 104-2. The low latency terminal device 104-1 may be a TXOP sharing terminal device, which can share a TXOP with the network device 102-2 associated with the low latency terminal device 104-2 or share a TXOP with the low latency terminal device 104-2. Under such cases, the network device 102-2 could also be called as a shared network device and the low latency terminal device 104-2 could also be called as a shared low latency terminal device. It should be noted that the sharing or sharing network devices or terminal devices here are just for exemplary purposes, one network device could not only act as a sharing network device, but also could act as a shared network device, and so does the terminal device. A sharing network device or terminal device represents a network device or terminal device that holds the TXOP, while the shared network device or terminal device represents a network device or terminal device that receives the TXOP.

In some example embodiments, the low latency terminal device may have a low latency data session such as XR (e.g., the VR, MR, AR, etc.) which typically has stringent latency requirements of a few milliseconds. Alternatively or additionally, the low latency terminal device may have low latency data packets in the buffer such as a sensor reading which needs to be reported with a short delay (e.g. a few milliseconds). Alternatively or additionally, the low latency terminal device may have data buffered that has a deadline to be transmitted within a few milliseconds.

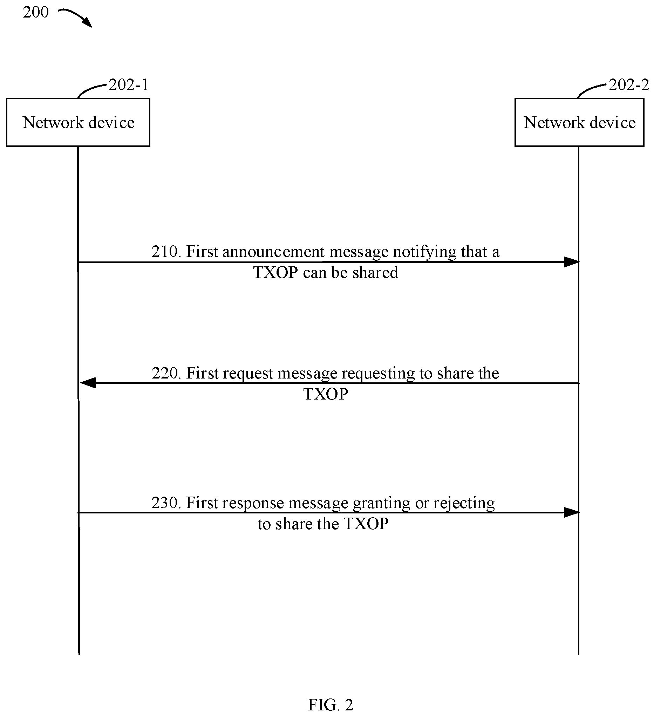

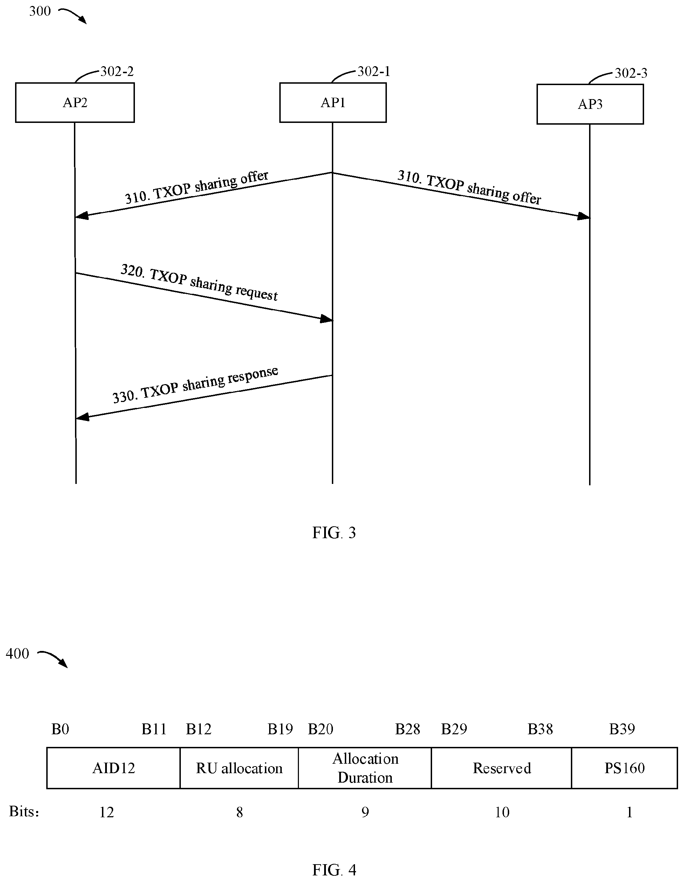

FIG. 2 illustrates an example signaling process 200 for TXOP sharing based on a TXOP sharing group between a network device 202-1 (for example, an AP 202-1 or a TRP 202-1) and another network device 202-2 (for example, an AP 202-2 or a TRP 202-2) according to some embodiments of the present disclosure. The network device 202-2 may be associated with a low latency terminal device 204-2 (for example, a terminal device 204-2 or a UE 204-2). The network devices 202-1 and 202-2 may refer to the network devices 102-1 and 102-2 in FIG. 1 respectively. Although the network device 202-2 in FIG. 2 is shown as only one unit, such network device 202-2 may represent a type of network device which comprise a plurality of network devices. For ease of understanding, FIG. 2 will be described with reference to FIG. 3 to FIG. 5.

At 210, the network device 202-1 may transmit, to at least one second network device 202-2, a first announcement message notifying that a transmission opportunity, TXOP, of the network device 202-1 can be shared. The network device 202-1 and the at least one second network device 202-2 are within one TXOP sharing group. At the same time, the network device 202-2 may receive, from the network device 202-1, the first announcement message notifying that a TXOP of the network device 202-1 can be shared. At 220, the network device 202-1 may receive, from the at least one second network device 202-2, at least one first request message requesting to share the TXOP. At the same time, the at least one second device 202-2 may transmit, to the network device 202-1, the at least one first request message to share the TXOP. At 230, the network device 202-1 may transmit, to the at least one second network device 202-2, at least one first response message granting or rejecting to share the TXOP. At the same time, the at least one second network device 202-2 may receive, from the network device 202-1, the first response message granting or rejecting to share the TXOP. The network device 202-1 may act as the sharing network device which holds a TXOP and grants the TXOP to the network device 202-2. The network device 202-2 may act as the shared network device which requires to share the TXOP. In this way, the network device 202-1 and at least one second network device 202-2 are organized as a TXOP sharing group.

FIG. 3 illustrates an example signaling process 300 for TXOP sharing based on a TXOP sharing group between a first access point AP1 302-1 and a second access point AP2 302-2 according to some embodiments of the present disclosure. Taking FIG. 3 as an example for FIG. 2, as can be seen, FIG. 3 contains AP1 302-1, AP2 302-2 and AP3 302-3. The AP1 302-1 acts as a sharing AP and may correspond to the network device 202-1 in FIG. 2. The AP2 302-2 acts as a shared AP and may correspond to the network device 202-2 in FIG. 2. The AP1 302-1, AP2 302-2 and AP3 302-3 are within one TXOP group. The AP1 302-1 transmits 310 a broadcast TXOP sharing offer message to other TXOP group members (e.g., AP2 302-2 and AP3 302-3) to indicate the opposability to share a TXOP. Then, AP2 302-2 transmits 320, to AP1 302-1, a TXOP sharing request message requesting to share the TXOP, but AP3 302-3 does not transmit any request to AP1 302-1 for requesting to share the TXOP due to some reasons. Then, AP1 302-1 transmits 330, to AP2 302-2, a TXOP sharing response message for granting or rejecting the TXOP to AP2 302-2.

Referring back to FIG. 2, in some example embodiments, prior to transmitting the at least one first response message granting or rejecting to share the TXOP, the network device 202-1 may determine to grant or reject each of the at least one second network device 202-2 to share the TXOP.

In some example embodiments, each of the first announcement message, the first request message and the first response message may be included in a control or an action frame. The first announcement message may be included in a broadcast control frame or action frame. In some embodiments the first announcement message, the first request message and the first response message may be sent over a wired connection or may be sent within a wireless mesh network.

In some example embodiments, the first announcement message may be included in a first multi-user request to send, MU-RTS, transmission frame, the first request message may be included in a multi-user clear to send, MU-CTS, frame, and the first response message may be included in a second MU-RTS transmission frame. In this way, the MU-RTS transmission frame is a broadcast frame and is possible to address multiple APs with the TXOP sharing group, the MU-RTS transmission frame could be used for the TXOP sharing group based TXOP sharing, avoiding introducing new signaling or increasing additional signaling overhead. In some example embodiments, the shared network device may send a CTS to self-transmission frame in response to the second MU-RTS transmission frame.

In some example embodiments, the first announcement message may carry at least one identity, ID, of the at least one second network device 202-2, wherein each second network device of the at least one second network device 202-2 has a separate ID within the one TXOP sharing group.

Referring to FIG. 3, the TXOP sharing offer message may be sent in a first MU-RTS transmission frame indicating an offer or rejection to share the TXOP, the TXOP sharing request may be sent in a MU-CTS frame requesting to share the TXOP, and the TXOP sharing response may be sent in a second MU-RTS transmission frame granting or rejecting to share the TXOP.

FIG. 4 illustrates an example structure 400 of a multi-user request to send (MU-RTS) frame format for notifying a TXOP can be shared according to some embodiments of the present disclosure. The MU-RTS transmission frame discussed before may have the structure 400 as shown in FIG. 4. Structure 400 may comprise an association ID (AID)12 field (e.g., bit B0 to B11), a resource unit (RU) allocation field (e.g., bit B12 to B19), an allocation duration field (e.g., bit B20 to B28), a reserved field (e.g., bit B29 to B38) and a PS160 field (e.g., bit B39). When the TXOP sharing offer message is included in a first MU-RTS transmission frame, the AID12 field of the first MU-RTS transmission frame may carry an ID of AP2 302-2 instead of the AID of AP1 302-1. An ID of the sharing AP1 302-1 may start with AID 1000 0000 0000, and the first MU-RTS transmission frame may carry AID 1000 0000 0001 for AP2 302-2. The AID12 field may comprise multiple IDs for multiple shared APs, each of which has its own RU allocation. The allocation duration can be set to the remainder of the TXOP.

Referring back to FIG. 2, in some example embodiments, the network device 202-1 may be configured to grant to one of the at least second network device 202-2 to share the TXOP, and the first response message may comprise an ID of the one second network device 202-2. Alternatively or additionally, the network device 202-1 may be configured to grant to a plurality of the at least one second network device 202-2 to share the TXOP, and the network device 202-1 may allocate a part of a frequency bandwidth or a part of a time duration of the TXOP to one of the plurality of the at least one second network device 202-2. In this way, the TXOP could be flexibly allocated to one shared AP or a plurality of shared APs.

In some example embodiments, the first announcement message may comprise a frame type information element indicating TXOP sharing. Alternatively or additionally, the first announcement message may comprise a TXOP sharing type information element indicating the first announcement message is used for notifying that the TXOP of the network device 202-1 can be shared. Alternatively or additionally, the first announcement message may comprise at least one ID of the at least one second network device 202-2, the at least one ID being followed by a resource unit, RU, allocation information element and an allocation duration information element.

In some example embodiments, each of the at least one first request message may comprise a frame type information element indicating TXOP sharing. Alternatively or additionally, each of the at least one first request message may comprise a TXOP sharing type information element indicating the first request message is used for requesting to share the TXOP. Alternatively or additionally, each of the at least one first request message may comprise an ID of the network device 202-1. Alternatively or additionally, each of the at least one first request message may comprise at least one bit indicating a presence of low latency traffic. Alternatively or additionally, each of the at least one first request message may comprise a buffer status report.

In some example embodiments, each of the at least one first response message may comprise a frame type information element indicating TXOP sharing. Alternatively or additionally, each of the at least one first response message may comprise a TXOP sharing type information element indicating the first response message is used for granting or rejecting to share the TXOP. Alternatively or additionally, each of the at least one first response message may comprise at least one ID of the at least one second network device 202-2, each of the at least one ID is followed by a resource unit, RU, allocation information element and an allocation duration information element.

Still taking FIG. 3 as an example, AP2 302-2 may respond to AP1 302-1 with a MU-CTS frame indicating it would like to take over the TXOP. Considering there might be multiple APs respond to AP1 302-1 with MU-CTS frames, AP1 302-1 may need to select the AP(s) to take over the TXOP. AP1 302-1 may be configured to grant to a single AP to take over the TXOP, AP1 302-1 may send a second MU-RTS transmission frame which includes only an ID of the granted AP, i.e., AP1 302-1, and then AP1 302-1 takes over the TXOP. Alternatively, assuming that the APs within the TXOP sharing group can operate on non-primary channels or time durations, AP1 302-1 may be configured to grant to multiple APs to take over the TXOP, AP1 302-1 may send a second MU-RTS transmission frame which includes IDs of the multiple APs, and then the multiple APs take over the TXOP on different frequency bandwidth parts or time durations. For example, assuming that AP1 302-1 operates on a frequency bandwidth of 160MHz, if both AP2 302-2 and AP3 302-3 request the TXOP, then AP1 302-1 can allocate the lower 80MHz frequency bandwidth part to AP2 302-2 and the upper 80MHz frequency bandwidth part to AP3 302-3 via the second MU-RTS transmission frames.

In some example embodiments, each of the TXOP sharing offer message, the TXOP sharing request message and the TXOP sharing response message could be sent in a newly defined control frame or action frame. The newly defined control frame or action frame may comprise a frame type information element indicating TXOP sharing. Alternatively or additionally, the newly defined control frame or action frame may comprise a TXOP sharing type information element indicating whether the control frame or action frame includes the TXOP sharing offer message, the TXOP sharing request message or the TXOP sharing response message. The TXOP sharing type information element may be indicated in e.g. 3 bits. In case that the control frame or action frame includes the TXOP sharing offer message or the TXOP sharing response message, the newly defined control frame or action frame may comprise ID(s) of shared AP(s) each is followed by RU allocation and allocation duration. In case that the control frame or action frame includes the TXOP sharing request message, the newly defined control frame or action frame may comprise the ID of AP1 302-1 which offers to share the TXOP, additional bit(s) indicating a presence of low latency traffic, and/or a buffer status report.

Referring back to FIG. 2, in some example embodiments, the network device 202-1 may determine to start one TXOP sharing group, and select a TXOP sharing group ID, which has not been used by other TXOP sharing groups, for the one TXOP sharing group. In this way, a TXOP sharing group could be formed for facilitating the TXOP sharing. In some example embodiments, the network device 202-1 may broadcast a second announcement message notifying existence of the one TXOP sharing group. At the same time, the at least one second network device 202-2 may receive, from the network device 202-1, the second announcement message notifying existence of the one TXOP sharing group. The second announcement message may be included in a beacon message, a broadcast control frame or a probe response frame. In some example embodiments, the second announcement message may comprise a TXOP sharing group ID for the one TXOP sharing group which has not been used by other TXOP sharing groups. In this way, the device which receives the second announcement message would know the existence of the TXOP sharing group. Alternatively or additionally, the second announcement message may comprise a number of members currently within the one TXOP sharing group. Alternatively or additionally, the second announcement message may comprise at least one ID of at least one member currently within the one TXOP sharing group. Alternatively or additionally, the second announcement message may comprise an indication of whether or not new members can join the TXOP sharing group.

In some example embodiments, the network device 202-1 may receive, from one network device which is not within the TXOP sharing group, a second request message requesting to join the TXOP sharing group, and transmit, to the one network device, a second response message granting or rejecting to join the TXOP sharing group. In this way, a network device which is outside the TXOP sharing group could be added into the TXOP sharing group. In some example embodiments, the second request message may comprise a TXOP sharing group ID for the one TXOP sharing group which has not been used by other TXOP sharing groups. In this way, the sharing network device 202-1 could know the network device which is outside the TXOP sharing group is requesting to be added into which TXOP sharing group. Alternatively or additionally, the second request message may comprise at least one bit indicating the one network device has at least one terminal device associated with low latency traffic. In this way, the sharing network device 202-1 may preferentially share the TXOP to other network devices which have associated low latency terminal devices. Alternatively or additionally, the second request message may comprise an indicator associated with a traffic load of the one network device. In this way, the sharing network device 202-1 may preferentially share the TXOP to other network devices which have high traffic load. Alternatively or additionally, the second request message may comprise an information that the one network device is able to operate on non-primary channels. In this way, the sharing network device 202-1 may later allocate different frequency bandwidth parts of the TXOP to other network devices. Alternatively or additionally, the second request message may comprise a channel bandwidth that the one network device operates on. In this way, the sharing network device 202-1 may allocate a frequency bandwidth part of the TXOP to another network device based on the received channel bandwidth information. For example, if the second request message comprises a channel bandwidth of 40MHz, the sharing network device 202-1 may know another network device is requesting 40MHz and allocate 40MHz to the another network device.

In some example embodiments, the second response message may comprise an ID for the one network device. In some example embodiments, the network device 202-1 may determine the ID to be used in the TXOP sharing group by one network device which is not within the TXOP sharing group, and transmit, to the one network device, the ID to be used in the TXOP sharing group. In this way, the one network device will get an ID to be used in the TXOP sharing group.

In some example embodiments, the network device 202-1 may receive, from another network device which is already within the TXOP sharing group, a third request message requesting to leave the TXOP sharing group, transmit, to the another network device, a third response message granting or rejecting to leave the TXOP sharing group. In some example embodiments, the network device 202-1 may determine, based on a predetermined time period, to remove another network device which is already within the TXOP sharing group from the TXOP sharing group, and transmit, to the another network device, an indication to remove the another network device from the TXOP sharing group. In this way, if the membership of the another network device within the TXOP sharing group expires after a certain time period, the another network device could be removed from the TXOP sharing group.

In some example embodiments, the network device 202-1 may increase the number of the members currently within the one TXOP sharing group by one in response to another network device joining the TXOP sharing group. For example, when there is another network device joining the TXOP sharing group, the another network device may increase the number of the members currently within the one TXOP sharing group by one, and transmit a third announcement message comprising the number of the members currently within the one TXOP sharing group to the network device 202-1. The another network device may get an ID based on the updated number of the members currently within the one TXOP sharing group. Then, the network device 202-1 may update the number of the members currently within the one TXOP sharing group by one after receiving the third announcement message. The third announcement message may be included in a beacon message, a broadcast control frame or an action frame. If there are a plurality of other network devices joining the TXOP sharing group and a plurality of third announcement messages transmitted to the network device 202-1 at the same time, the network device 202-1 may update the number of the members currently within the one TXOP sharing group as a highest number value derived from the plurality of the third announcement messages. In this way, if there is no TXOP sharing group owner in the TXOP sharing group and the network devices within the TXOP sharing group are hidden to each other, each network device could get an ID based on the number of the members currently within the one TXOP sharing group and join the TXOP sharing group, obtaining the ID in an implicit manner.

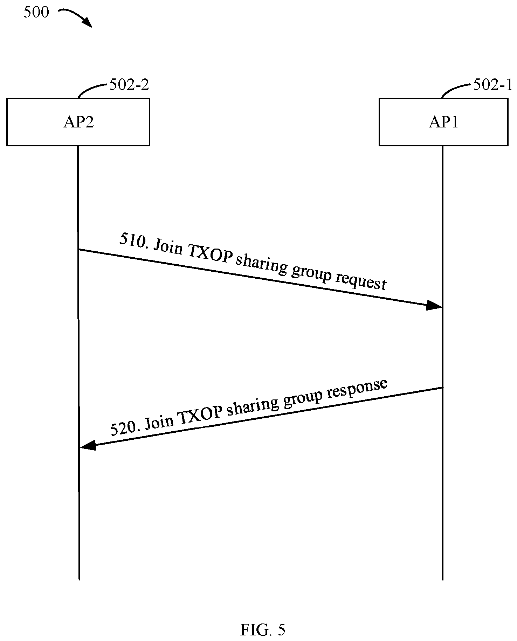

FIG. 5 illustrates an example signaling process 500 for an AP (e.g., AP2 502-2) requesting to join a TXOP sharing group according to some embodiments of the present disclosure. Taking FIG. 5 as an example for FIG. 2, as can be seen, FIG. 5 contains AP1 502-1 and AP2 502-2. The AP1 502-1 acts as a sharing AP and may correspond to the network device 202-1 in FIG. 2. The AP2 502-2 acts as a shared AP and may correspond to the network device 202-2 in FIG. 2.

In some example embodiments, AP1 502-1 may decide to start a new TXOP sharing group and select an ID for the TXOP sharing group which is not in use by other TXOP sharing groups. AP1 502-1 may broadcast an announcement message (i.e., a second announcement message) notifying existence of the new TXOP sharing group. The message may be included in a beacon message, a separate control frame or a probe response frame. The message may contain (new) information fields with the information elements comprising at least one of: a TXOP sharing group ID (e.g., in 1 byte) which has not been used by other TXOP sharing groups; a number of members currently within the new TXOP sharing group (e.g., in 1 byte); at least one ID of at least one member currently within the new TXOP sharing group; or an indication of whether or not new members can join the TXOP sharing group (e.g., in 1 bit, with a value of "1" indicating new members can join the TXOP sharing group and a value of "0" indicating new members cannot join the TXOP sharing group).

After receiving the announcement message from AP1 502-1, AP2 502-2 may decide to join the new TXOP sharing group, and transmit 510 a join TXOP sharing group request (i.e., a second request message) to AP1 502-1. The join TXOP sharing group request may comprise at least one of: the TXOP sharing group ID for the one TXOP sharing group; at least one bit indicating AP2 502-2 has at least one STA associated with low latency traffic; an indicator associated with a traffic load of AP2 502-2; or capability information of AP2 502-2 (e.g., an information that AP2 502-2 is able to operate on non-primary channels, a channel bandwidth that AP2 502-2 operates on or other kinds of capability information).

In some example embodiments, AP1 502-1 acts as a TXOP sharing group owner of the TXOP sharing group. Under such embodiments, in response to receiving the join TXOP sharing group request, AP1 502-1 may transmit, to AP2 502-2, a join TXOP sharing group response for granting or rejecting the request of AP2 502-2 to join the TXOP sharing group. AP1 502-1 may assign an ID to be used in the TXOP sharing group to AP2 502-2. After AP2 502-2 being a member of the TXOP sharing group for a certain period of time, the membership of AP2 502-2 in the TXOP sharing group may expire. AP2 502-2 may transmit, to AP1 502-1, a leaving request message requesting to leave the TXOP sharing group and AP1 502-1 may transmit a response message for granting or rejecting the leaving request of AP2 502-2 to AP2 502-2. Alternatively, AP1 502-1 may initiatively transmit a leaving notification message to AP2 502-2 notifying AP2 502-2 is to be removed from the TXOP sharing group. In some example embodiments, AP1 502-1 may signal to AP2 502-2 to assign a new ID to AP2 502-2 after a certain period of time. In this way, AP1 502-1 is a TXOP sharing group owner which manages the TXOP sharing group, AP2 502-2 could join the TXOP sharing group via the request and response messages in an explicit manner if it receives the announcement message from AP1 502-1, which provides a robust TXOP sharing group joining scheme.

In some other example embodiments, the TXOP sharing group may not have a TXOP sharing group owner. Under such embodiments, AP1 502-1 still may decide to start a new TXOP sharing group, select an ID for the TXOP sharing group which is not in use by other TXOP sharing groups and broadcast an announcement message (i.e., a second announcement message) notifying existence of the new TXOP sharing group similar as above. Besides, under such embodiments, the number of the members currently within the TXOP sharing group is used for determining an ID to be used in the TXOP sharing group for the shared AP. For example, AP1 502-1 may start a new TXOP sharing group with an ID 1000 0000, AP2 502-2 joining the TXOP sharing group may increase the number of the members currently within the TXOP sharing group by one and gets an ID 1000 0001, then AP2 502-2 may broadcast another announcement message (e.g., a dedicated control frame, a beacon message or a probe response frame) containing the updated number of the members currently within the TXOP sharing group. Similarly, other APs receiving the announcement message from AP1 502-1 will increase the number of the members currently within the TXOP sharing group at its own side and broadcast other announcement messages containing the updated number of the members currently within the TXOP sharing group. If AP1 502-1 receives multiple announcement messages from different APs, it will update the number of the members currently within the TXOP sharing group as highest value derived from the multiple announcement messages. In this way, AP2 502-2 could join the TXOP sharing group and gets an ID to be used within the TXOP sharing group in an implicit manner, which applies for the scenario with a large area and the APs are hidden to each other.

In some example embodiments, AP2 502-2 may be switched off when it is a member of the TXOP sharing group and the TXOP sharing group may contain inactive members after a certain period of time. To address this, the members of the TXOP sharing group may be renewed periodically, e.g., once a day, so as to ensure the members within the TXOP sharing group are active.

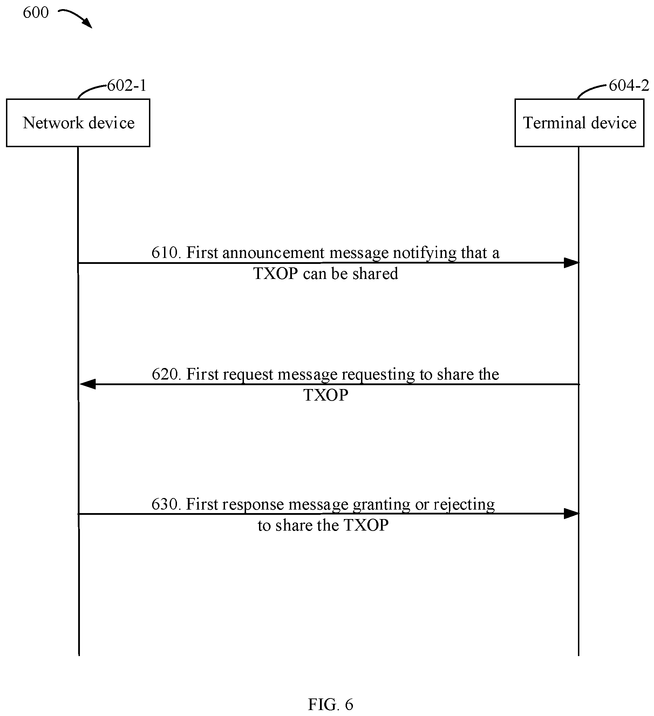

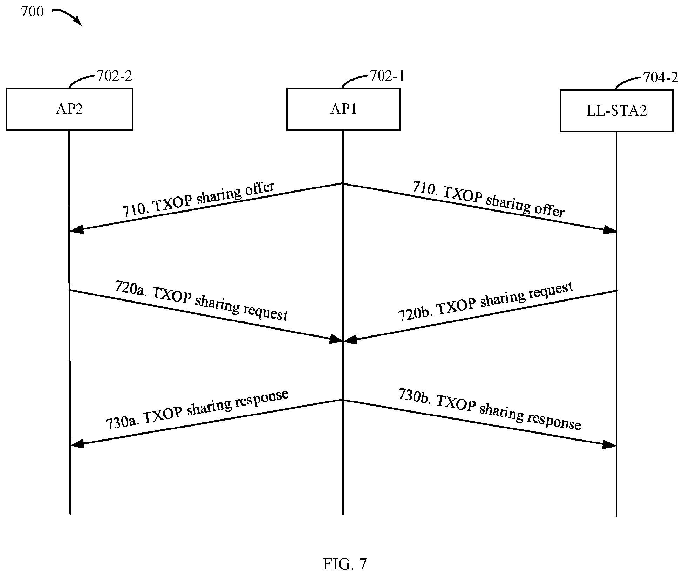

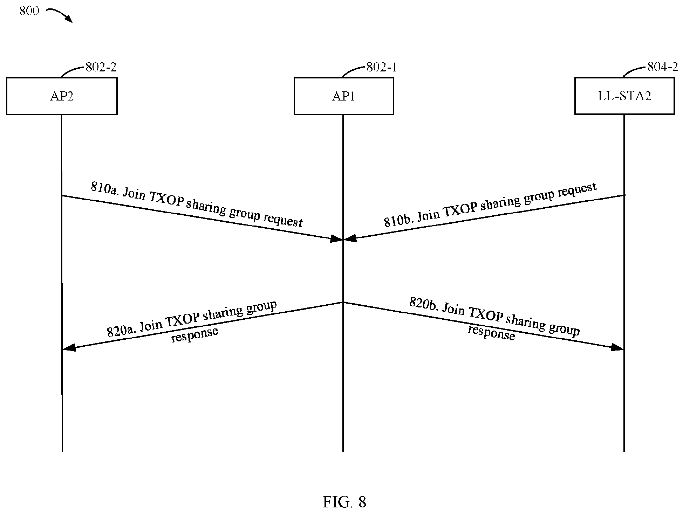

FIG. 6 illustrates an example signaling process 600 for TXOP sharing based on a TXOP sharing group among network device(s) (for example, a network device 602-1, an AP 602-1 or a TRP 602-1) and terminal device (s) (for example, a terminal device 604-2 or a UE 604-2) according to some embodiments of the present disclosure. The terminal device 604-2 may be associated with a network device 602-2 (which is not shown). The network device 602-1 and 602-2 may refer to the network devices 102-1 and 102-2 in FIG. 1 respectively. The terminal device 604-2 may refer to the terminal device 104-2 in FIG. 1. Although there is only one network device 602-1 and one terminal device 604-2 in FIG. 6, the network device 602-1 may represent a type of network device which comprise a plurality of network devices and the terminal device 604-2 may represent a type of terminal device which comprises a plurality of terminal devices. For ease of understanding, FIG. 6 will be described with reference to FIG. 7 and FIG. 8.

FIG. 6 mainly differs from FIG. 2 in that the TXOP sharing group is extended to be able to contain the low latency terminal devices as TXOP sharing group members. FIG. 6 applies for the scenario in which a network device may not know which one of its associated terminal devices has low latency traffic to be sent. Typically, low latency traffic requires data packets to be sent within a few milliseconds. Assuming that a sharing network device holds a TXOP for 5ms. It is very likely that a low latency terminal device associated with another network device in the TXOP sharing Group will receive low latency traffic during that time. However, the network device associated with that low latency terminal device may not know about that and will not respond to the TXOP sharing offer message of the sharing AP. Therefore, FIG. 6 provides a solution to allow the low latency terminal device to take advantage of the TXOP sharing offer message.

At 610, the network device 602-1 may transmit, to at least one terminal device 604-2, a first announcement message notifying that a transmission opportunity, TXOP, of the network device 602-1 can be shared. The network device 602-1 and the at least one terminal device 604-2 are within one TXOP sharing group. The at least one terminal device 604-2 has low latency traffic. At the same time, the terminal device 604-2 may receive, from the network device 602-1, the first announcement message notifying that a TXOP of the network device 602-1 can be shared. At 620, the network device 602-1 may receive, from the at least one terminal device 604-2, at least one first request message requesting to share the TXOP. At the same time, the at least one second device 604-2 may transmit, to the network device 602-1, the at least one first request message to share the TXOP. At 630, the network device 602-1 may transmit, to the at least one terminal device 604-2, at least one first response message granting or rejecting to share the TXOP. At the same time, the at least one terminal device 604-2 may receive, from the network device 602-1, the first response message granting or rejecting to share the TXOP. The network device 602-1 may act as the sharing network device which holds a TXOP and grants the TXOP to the terminal device 604-2. The terminal device 604-2 may act as the shared terminal device which requires to share the TXOP. In this way, the network device 602-1 and at least one terminal device 604-2 are organized as a TXOP sharing group. The TXOP sharing group also may comprise other network devices. In some example embodiments, the TXOP sharing device could be a terminal device (e.g., a low latency terminal device). In other words, a network device or a low latency terminal device can act as a TXOP sharing device and another network device or another low latency terminal device can act as a TXOP shared device. The network device holding a TXOP could share the TXOP to another network device associated with a low latency terminal device or to the low latency terminal device. The low latency terminal device holding a TXOP also could share the TXOP to another low latency terminal device or a network device associated with the another low latency terminal device.

FIG. 7 illustrates an example signaling process 700 for TXOP sharing based on a TXOP sharing group among APs 702-1, 702-2 and LL-STA 704-2 according to some other embodiments of the present disclosure. Taking FIG. 7 as an example for FIG. 6, as can be seen, FIG. 7 contains AP1 702-1, AP2 702-2 and LL-STA2 704-2. The AP1 702-1 acts as a sharing AP and may correspond to the network device 102-1 in FIG. 1. The AP2 702-2 acts as a shared AP and may correspond to the network device 102-2 in FIG. 1. The LL-STA2 704-2 acts as a shared STA and may correspond to the terminal device 104-2 in FIG. 1. The AP1 702-1, AP2 702-2 and LL-STA2 704-2 are within one TXOP group. The AP1 702-1 transmits 710 a broadcast TXOP sharing offer message to other TXOP group members (e.g., AP2 702-2 and LL-STA2 704-2) to indicate the possibility to share a TXOP. Then, AP2 702-2 transmits 720a, to AP1 702-1, a TXOP sharing request message requesting to share the TXOP, and LL-STA2 704-2 transmits 720b, to AP1 702-1, a TXOP sharing request message requesting to share the TXOP. Then, AP1 702-1 transmits 730a, to AP2 702-2, a TXOP sharing response message for granting or rejecting the TXOP to AP2 702-2, and transmits 730b, to LL-STA2 704-2, a TXOP sharing response message for granting or rejecting the TXOP to LL-STA2 704-2.

Referring back to FIG. 6, in some example embodiments, prior to transmitting the at least one first response message granting or rejecting to share the TXOP, the network device 602-1 may determine to grant or reject each of the at least one terminal device 604-2 to share the TXOP.

In some example embodiments, each of the first announcement message, the first request message and the first response message may be included in a control frame or action frame. The first announcement message may be included in a broadcast control frame or action frame.

In some example embodiments, the first announcement message may be included in a first multi-user request to send, MU-RTS, transmission frame, the first request message may be included in a multi-user clear to send, MU-CTS, frame, and the first response message may be included in a second MU-RTS transmission frame. In this way, the MU-RTS transmission frame is a broadcast frame and is possible to address multiple APs and LL-STAs with the TXOP sharing group, the MU-RTS transmission frame could be used for the TXOP sharing group based TXOP sharing, avoiding introducing new signaling or increasing additional signaling overhead.

In some example embodiments, the first announcement message may carry at least one identity, ID, of the at least one terminal device 604-2, wherein each of the at least one terminal device 604-2 has a separate ID within the one TXOP sharing group.

In some example embodiments, the at least one first request message may be transmitted in response to at least one ID selected by the at least one terminal device 604-2 from a plurality of IDs reserved for devices with low latency traffic being the same as at least one ID carried by the first announcement message. In this way, if the terminal device 604-2 randomly selects one ID from a plurality reserved IDs and it finds that the selected ID is same as one ID carried by the first announcement message, the terminal device 604-2 will transmit the first request message requesting to share the TXOP. In some example embodiments, the plurality of IDs reserved for devices with low latency traffic may be specified by a protocol. Alternatively or additionally, the plurality of IDs reserved for devices with low latency traffic may be determined based on a start ID and an ID size, which are carried by the first announcement message.

Referring to FIG. 7, the TXOP sharing offer message may be sent 710 in a first MU-RTS transmission frame indicating an offer or rejection to share the TXOP, the TXOP sharing request message may be sent in a MU-CTS frame requesting to share the TXOP, and the TXOP sharing response may be sent in a second MU-RTS transmission frame granting or rejecting to share the TXOP. The MU-RTS transmission frame may have a structure 400 as shown in FIG. 4.

When the TXOP sharing response message is included in a MU-RTS transmission frame, the AID12 field of the MU-RTS transmission frame may carry IDs of AP2 702-2 and LL-STA2 704-2 instead of the AID of AP1 702-1. An ID of the sharing AP1 702-1 may start with AID 1000 0000 0000, AIDs 0000 0000 0000 to 0111 1111 1111 may be reserved for regular AIDs, and AIDs larger than 1000 0000 0000 may be reserved for LL-STAs to be used in the TXOP sharing group.

In some example embodiments, the IDs reserved for LL-STAs are specified by a protocol or a standard. For example, it may be defined that AIDs 1000 0001 0000 to 1000 0001 0111 are reserved for LL-STAs, that is to say, 7 AIDs are reserved for LL-STAs. Alternatively or additionally, the IDs reserved for LL-STAs may be determined based on a start ID and an ID size, which are carried by the first MU-RTS transmission frame. For example, the start ID may be AID 1000 0000 0000 and the ID size may be 4 bits. In this way, the sharing AP1 702-1 may be able to flexibly increase or decrease the ID size for LL-STAs, which makes it possible to use a large ID size when there is a lot of LL-STAs in a coverage area of the TXOP sharing group and could avoid collisions among LL-STAs.

If the LL-STA 704-2 randomly selects one ID from the IDs reserved for LL-STA 704-2 and it finds that the selected ID is same as one ID carried by the first MU-RTS transmission frame, the LL-STA 704-2 will transmit 720b the first request message requesting to share the TXOP and may receive 730b a TXOP sharing response message from AP1 702-1 for granting or rejecting to join the TXOP sharing group.

Referring back to FIG. 6, in some example embodiments, the network device 602-1 may be configured to grant to one of the at least one terminal device 604-2 to share the TXOP, and the first response message may comprise an ID of the one terminal device 604-2. Alternatively or additionally, the network device 602-1 may be configured to grant to a plurality of the at least one terminal device 604-2 to share the TXOP, and the network device 602-1 may allocate a part of a frequency bandwidth or a part of a time duration of the TXOP to one of the plurality of the at least one terminal device 604-2. In other words, the network device 602-1 may allocate different frequency bandwidth parts or different time durations of the TXOP to different terminal devices. In this way, the TXOP could be flexibly allocated to one shared low latency terminal device or a plurality of latency terminal devices.

In some example embodiments, the first announcement message may comprise a frame type information element indicating TXOP sharing. Alternatively or additionally, the first announcement message may comprise a TXOP sharing type information element indicating the first announcement message is used for notifying that the TXOP of the network device 602-1 can be shared. Alternatively or additionally, the first announcement message may comprise at least one ID of the at least one terminal device 604-2, the at least one ID being followed by a resource unit, RU, allocation information element and an allocation duration information element.

In some example embodiments, each of the at least one first request message may comprise a frame type information element indicating TXOP sharing. Alternatively or additionally, each of the at least one first request message may comprise a TXOP sharing type information element indicating the first request message is used for requesting to share the TXOP. Alternatively or additionally, each of the at least one first request message may comprise an ID of the network device 602-1. Alternatively or additionally, each of the at least one first request message may comprise at least one bit indicating a presence of low latency traffic. Alternatively or additionally, each of the at least one first request message may comprise a buffer status report.

In some example embodiments, each of the at least one first response message may comprise a frame type information element indicating TXOP sharing. Alternatively or additionally, each of the at least one first response message may comprise a TXOP sharing type information element indicating the first response message is used for granting or rejecting to share the TXOP. Alternatively or additionally, each of the at least one first response message may comprise at least one ID of the at least one terminal device 604-2, each of the at least one ID is followed by a resource unit, RU, allocation information element and an allocation duration information element.

Still taking FIG. 7 as an example, AP2 702-2 may respond to AP1 702-1 with a MU-CTS frame by transmitting 720a a TXOP sharing request message indicating it would like to take over the TXOP, and LL-STA2 704-2 may respond to AP1 702-1 with a MU-CTS frame by transmitting 720b a TXOP sharing request message indicating it would like to take over the TXOP. Considering there might be multiple devices responding to AP1 702-1 with MU-CTS frames, AP1 702-1 may need to select the device(s) to take over the TXOP. AP1 702-1 may be configured to grant to a single LL-STA2 704-2 to take over the TXOP, AP1 702-1 may send a second MU-RTS transmission frame which includes only an ID of the granted LL-STA, i.e., LL-STA2 704-2, and then LL-STA2 704-2 takes over the TXOP. Alternatively, assuming that the devices within the TXOP sharing group can operate on non-primary channels or time durations, AP1 702-1 may be configured to grant to multiple devices to take over the TXOP, AP1 702-1 may send a second MU-RTS transmission frame which includes IDs of the multiple devices, and then the multiple devices take over the TXOP on different frequency bandwidth parts or time durations. For example, assuming that AP1 702-1 operates on a frequency bandwidth of 160MHz, if both AP2 702-2 and LL-STA2 704-2 request the TXOP, then AP1 702-1 can allocate the lower 80MHz frequency bandwidth part to AP2 702-2 and the upper 80MHz frequency bandwidth part to LL-STA2 704-2 via the second MU-RTS transmission frames.

In some example embodiments, each of the TXOP sharing offer message, the TXOP sharing request message and the TXOP sharing response message could be sent in a newly defined control frame or action frame. The newly defined control frame or action frame may comprise a frame type information element indicating TXOP sharing. Alternatively or additionally, the newly defined control frame or action frame may comprise a TXOP sharing type information element indicating whether the control frame or action frame includes the TXOP sharing offer message, the TXOP sharing request message or the TXOP sharing response message. The TXOP sharing type information element may be indicated in e.g. 3 bits. In case that the control frame or action frame includes the TXOP sharing offer message or the TXOP sharing response message, the newly defined control frame or action frame may comprise ID(s) of shared AP(s) each is followed by RU allocation and allocation duration. In case that the control frame or action frame includes the TXOP sharing request message, the newly defined control frame or action frame may comprise the ID of AP1 702-1 which offers to share the TXOP, additional bit(s) indicating a presence of low latency traffic, and/or a buffer status report.

Referring back to FIG. 6, in some example embodiments, the network device 602-1 may determine to start one TXOP sharing group, and select a TXOP sharing group ID, which has not been used by other TXOP sharing groups, for the one TXOP sharing group. In this way, a TXOP sharing group could be formed for facilitating the TXOP sharing. In some example embodiments, the network device 602-1 may broadcast a second announcement message notifying existence of the one TXOP sharing group. At the same time, the at least one terminal device 604-2 may receive, from the network device 602-1, the second announcement message notifying existence of the one TXOP sharing group. The second announcement message may be included in a beacon message, a broadcast control frame or a probe response frame. In some example embodiments, the second announcement message may comprise a TXOP sharing group ID for the one TXOP sharing group which has not been used by other TXOP sharing groups. In this way, the device which receives the second announcement message would know the existence of the TXOP sharing group. Alternatively or additionally, the second announcement message may comprise a number of members currently within the one TXOP sharing group. Alternatively or additionally, the second announcement message may comprise at least one ID of at least one member currently within the one TXOP sharing group. Alternatively or additionally, the second announcement message may comprise an indication of whether or not new members can join the TXOP sharing group. Alternatively or additionally, the second announcement message may comprise an indication of whether or not terminal devices having low latency traffic can participate in sharing the TXOP. Alternatively or additionally, the second announcement message may comprise an indication of whether or not terminal devices having low latency traffic can join the one TXOP sharing group explicitly.

In some example embodiments, the network device 602-1 may receive, from one terminal device which is not within the TXOP sharing group and has a capability to transmit low latency traffic, a second request message requesting to join the TXOP sharing group, and transmit, to the one terminal device, a second response message granting or rejecting to join the TXOP sharing group. In this way, a low latency terminal device which is outside the TXOP sharing group could be added into the TXOP sharing group. In some example embodiments, the second request message may comprise a TXOP sharing group ID for the one TXOP sharing group which has not been used by other TXOP sharing groups. In this way, the sharing network device could know the low latency terminal device which is outside the TXOP sharing group is requesting to be added into which TXOP sharing group. Alternatively or additionally, the second request message may comprise at least one bit indicating the one terminal device has low latency traffic. In this way, the sharing network device 602-1 may preferentially share the TXOP to terminal devices which have associated low latency terminal devices. Alternatively or additionally, the second request message may comprise an indicator associated with a traffic load of the one terminal device. In this way, the sharing network device may preferentially share the TXOP to the terminal devices which have high traffic load. Alternatively or additionally, the second request message may comprise an information that the one terminal device is able to operate on non-primary channels. In this way, the sharing network device 602-1 may allocate different frequency bandwidth parts of the TXOP to different TXOP group members. Alternatively or additionally, the second request message may comprise a channel bandwidth that the one terminal device operates on. In this way, the sharing network device 602-1 may allocate a frequency bandwidth part of the TXOP to the one terminal device based on the received channel bandwidth information. For example, if the second request message comprises a channel bandwidth of 40MHz, the sharing network device 602-1 may know the one terminal device is requesting 40MHz and allocate 40MHz to the one terminal device.

In some example embodiments, the second response message may comprise an ID for the one terminal device. In some example embodiments, the network device 602-1 may determine the ID to be used in the TXOP sharing group by one terminal device which is not within the TXOP sharing group, and transmit, to the one terminal device, the ID to be used in the TXOP sharing group. In this way, the terminal device will get an ID to be used in the TXOP sharing group.

In some example embodiments, the network device 602-1 may receive, from a terminal device which is already within the TXOP sharing group, a third request message requesting to leave the TXOP sharing group, transmit, to the terminal device, a third response message granting or rejecting to leave the TXOP sharing group. In some example embodiments, the network device 602-1 may determine, based on a predetermined time period, to remove the terminal device which is already within the TXOP sharing group from the TXOP sharing group, and transmit, to the terminal device, an indication to remove the terminal device from the TXOP sharing group. In this way, if the membership of the terminal device within the TXOP sharing group expires after a certain time period, the terminal device could be removed from the TXOP sharing group.

In some example embodiments, the network device 602-1 may increase the number of the members currently within the one TXOP sharing group by one in response to another device (a network device or a terminal device) joining the TXOP sharing group. For example, when there is another device joining the TXOP sharing group, the another device may increase the number of the members currently within the one TXOP sharing group by one, and transmit a third announcement message comprising the number of the members currently within the one TXOP sharing group to the network device 602-1. The another device may get an ID based on the updated number of the members currently within the one TXOP sharing group. Then, the network device 602-1 may update the number of the members currently within the one TXOP sharing group by one after receiving the third announcement message. The third announcement message may be included in a beacon message, a broadcast control frame or an action frame. If there are a plurality of other devices joining the TXOP sharing group and a plurality of third announcement messages transmitted to the network device 602-1 at the same time, the network device 602-1 may update the number of the members currently within the one TXOP sharing group as a highest number value derived from the plurality of the third announcement messages. In this way, if there is no TXOP sharing group owner in the TXOP sharing group and the devices within the TXOP sharing group are hidden to each other, each device could get an ID based on the number of the members currently within the one TXOP sharing group and join the TXOP sharing group in an implicit manner.

FIG. 8 illustrates an example signaling process 800 for a LL-STA (e.g., a LL-STA 804-2) requesting to join a TXOP sharing group according to some embodiments of the present disclosure. Taking FIG. 8 as an example for FIG. 6, as can be seen, FIG. 8 contains AP1 802-1, AP2 802-2 and an LL-STA2 804-2. The AP1 802-1 acts as a sharing AP and may correspond to the network device 102-1 in FIG. 1. The AP2 802-2 acts as a shared AP and may correspond to the network device 102-2 in FIG. 1. The LL-STA2 804-2 acts as a shared LL-STA and may correspond to the terminal device 104-2 in FIG. 1.

In some example embodiments, AP1 802-1 may decide to start a new TXOP sharing group and select an ID for the TXOP sharing group which is not in use by other TXOP sharing groups. AP1 802-1 may broadcast an announcement message (i.e., a second announcement message) notifying existence of the new TXOP sharing group. The message may be included in a beacon message, a separate control frame or a probe response frame. The message may contain (new) information fields with the information elements comprising at least one of: a TXOP sharing group ID (e.g., in 1 byte) which has not been used by other TXOP sharing groups; a number of members currently within the new TXOP sharing group (e.g., in 1 byte); at least one ID of at least one member (including AP(s) and/or STA(s)) currently within the new TXOP sharing group; an indication of whether or not new members can join the TXOP sharing group (e.g., in 1 bit, with a value of "1" indicating new members can join the TXOP sharing group and a value of "0" indicating new members cannot join the TXOP sharing group); or an indication of whether or not LL-STA can participate in sharing the TXOP (e.g., in 1 bit, with a value of "1" indicating LL-STA can participate in sharing the TXOP and a value of "0" indicating LL-STA cannot participate in sharing the TXOP); or an indication of whether or not LL-STA can join the one TXOP sharing group explicitly (e.g., in 1 bit, with a value of "1" indicating LL-STA can join the one TXOP sharing group explicitly and a value of "0" indicating LL-STA cannot join the one TXOP sharing group explicitly).

After receiving the announcement message from AP1 802-1, LL-STA2 804-2 may decide to join the new TXOP sharing group, and transmit 810b a join TXOP sharing group request (i.e., a second request message) to AP1 802-1. The join TXOP sharing group request may comprise at least one of: the TXOP sharing group ID for the one TXOP sharing group; at least one bit indicating LL-STA2 804-2 has low latency traffic; an indicator associated with a traffic load of LL-STA2 804-2; or capability information of LL-STA2 804-2 (e.g., an information that LL-STA2 804-2 is able to operate on non-primary channels, a channel bandwidth that LL-STA2 804-2 operates on or other kinds of capability information). Similarly, AP2 802-2 may decide to join the new TXOP sharing group, and transmit 810a a join TXOP sharing group request (i.e., a second request message) to AP1 802-1.

In some example embodiments, AP1 802-1 acts as a TXOP sharing group owner of the TXOP sharing group. Under such embodiments, in response to receiving the join TXOP sharing group request, AP1 802-1 may transmit 820a, to AP2 802-2, a join TXOP sharing group response for granting or rejecting the request of AP2 802-2 to join the TXOP sharing group, and AP1 802-1 may transmit 820b, to LL-STA2 804-2, a join TXOP sharing group response for granting or rejecting the request of LL-STA2 804-2 to join the TXOP sharing group. AP1 802-1 may assign an ID to be used in the TXOP sharing group to AP2 802-2 or LL-STA2 804-2. After AP2 802-2 or LL-STA2 804-2 being a member of the TXOP sharing group for a certain period of time, the membership of AP2 802-2 or LL-STA2 804-2 in the TXOP sharing group may expire. AP2 802-2 or LL-STA2 804-2 may transmit a leaving request message requesting to leave the TXOP sharing group to AP1 802-1 and AP1 802-1 may transmit a response message for granting or rejecting the leaving request of AP2 802-2 or LL-STA2 804-2. Alternatively, AP1 802-1 may initiatively transmit a leaving notification message to AP2 802-2 or LL-STA2 804-2 notifying AP2 802-2 or LL-STA2 804-2 is to be removed from the TXOP sharing group. In some example embodiments, AP1 802-1 may signal to AP2 802-2 or LL-STA2 804-2 to assign a new ID to AP2 802-2 or LL-STA2 804-2 after a certain period of time. In this way, AP1 802-1 is a TXOP sharing group owner which manages the TXOP sharing group, AP2 802-2 or LL-STA2 804-2 could join the TXOP sharing group via the request and response messages in an explicit manner if it receives the announcement message from AP1 802-1, which provides a robust TXOP sharing group joining scheme.

In some example embodiments, the TXOP sharing group may not have a TXOP sharing group owner. Under such embodiments, AP1 802-1 still may decide to start a new TXOP sharing group, select an ID for the TXOP sharing group which is not in use by other TXOP sharing groups and broadcast an announcement message (i.e., a second announcement message) notifying existence of the new TXOP sharing group similar as above. Besides, under such embodiments, the number of the members currently within the TXOP sharing group is used for determining an ID to be used in the TXOP sharing group for the shared AP. For example, AP1 802-1 may start a new TXOP sharing group with an ID 1000 0000, AP2 802-2 or LL-STA2 804-2 joining the TXOP sharing group may increase the number of the members currently within the TXOP sharing group by one and gets an ID 1000 0001, then AP2 802-2 or LL-STA2 804-2 may broadcast another announcement message (e.g., a dedicated control frame, a beacon message or a probe response frame) containing the updated number of the members currently within the TXOP sharing group. Similarly, other APs receiving the announcement message from AP1 802-1 will increase the number of the members currently within the TXOP sharing group at its own side and broadcast another announcement message containing the updated number of the members currently within the TXOP sharing group. If AP1 802-1 receives multiple announcement messages from different APs, it will update the number of the members currently within the TXOP sharing group as highest value derived from the multiple announcement messages. In this way, AP2 802-2 or LL-STA2 804-2 could join the TXOP sharing group and get an ID to be used within the TXOP sharing group in an implicit manner, which applies for the scenario with a large area and the APs are hidden to each other.

In some example embodiments, AP2 802-2 or LL-STA2 804-2 may be switched off when it is a member of the TXOP sharing group and the TXOP sharing group may contain inactive members after a certain period of time. To address this, the members of the TXOP sharing group may be renewed periodically, e.g., once a day, so as to ensure the members within the TXOP sharing group are active.

By implementing the embodiments described with reference to FIG. 1 to FIG. 8, a sharing AP could efficiently know with which other AP(s) or LL-STAs it shares the TXOP, based on the TXOP sharing group, and a sharing LL-STA also could efficiently know with which AP(s) or other LL-STAs it shares the TXOP, based on the TXOP sharing group, enhancing the using of the TXOP and improving transmission efficiency.

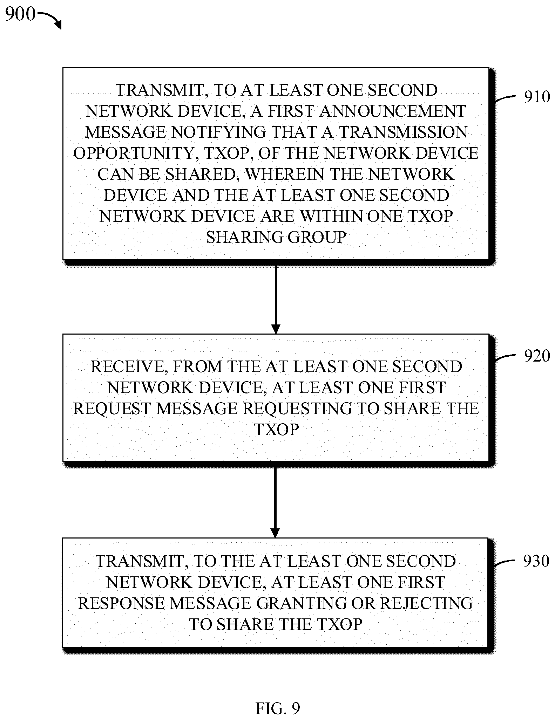

FIG. 9 illustrates a flowchart of an example method 900 implemented at a network device (for example, a network device 102-1, 202-1, 302-1, 502-1, 602-1, 702-1 or 802-1) in accordance with some embodiments of the present disclosure. For ease of understanding, the method 900 will be described from the perspective of the network device 202-1 with reference to FIG. 2.

At block 910, the network device transmits, to at least one second network device, a first announcement message notifying that a transmission opportunity, TXOP, of the network device can be shared, wherein the network device and the at least one second network device are within one TXOP sharing group. At block 920, the network device receives, from the at least one second network device, at least one first request message requesting to share the TXOP. At block 930, the network device transmits, to the at least one second network device, at least one first response message granting or rejecting to share the TXOP.

In some example embodiments, each of the first announcement message, the first request message and the first response message is included in a control frame or action frame.

In some example embodiments, the first announcement message is included in a first multi-user request to send, MU-RTS, transmission frame, the first request message is included in a multi-user clear to send, MU-CTS, frame, and the first response message is included in a second MU-RTS transmission frame.

In some example embodiments, the first announcement message carries at least one identity, ID, of the at least one second network device, wherein each second network device of the at least one second network device has a separate ID within the one TXOP sharing group.

In some example embodiments, the network device is configured to grant to one of the at least second network device to share the TXOP, and the first response message comprises an ID of the one second network device.

In some example embodiments, the network device is configured to grant to a plurality of the at least one second network device to share the TXOP, the network device is further configured to: allocate a part of a frequency bandwidth or a part of a time duration of the TXOP to one of the plurality of the at least one second network device.

In some example embodiments, the first announcement message comprises at least one of the following: a frame type information element indicating TXOP sharing; a TXOP sharing type information element indicating the first announcement message is used for notifying that the TXOP of the network device can be shared; or at least one ID of the at least one second network device, the at least one ID being followed by a resource unit, RU, allocation information element and an allocation duration information element.

In some example embodiments, each of the at least one first request message comprises at least one of the following: a frame type information element indicating TXOP sharing; a TXOP sharing type information element indicating the first request message is used for requesting to share the TXOP; an ID of the network device; at least one bit indicating a presence of low latency traffic; or a buffer status report.

In some example embodiments, each of the at least one first response message comprises at least one of the following: a frame type information element indicating TXOP sharing; a TXOP sharing type information element indicating the first response message is used for granting or rejecting to share the TXOP; or at least one ID of the at least one second network device, each of the at least one ID is followed by a resource unit, RU, allocation information element and an allocation duration information element.

In some example embodiments, the network device is further configured to: determine to start the one TXOP sharing group; and select a TXOP sharing group ID, which has not been used by other TXOP sharing groups, for the one TXOP sharing group.

In some example embodiments, the network device is further configured to: broadcast a second announcement message notifying existence of the one TXOP sharing group.

In some example embodiments, the second announcement message is included in a beacon message, a broadcast control frame or a probe response frame.

In some example embodiments, the second announcement message comprises at least one of the following: a TXOP sharing group ID for the one TXOP sharing group which has not been used by other TXOP sharing groups; a number of members currently within the one TXOP sharing group; at least one ID of at least one member currently within the one TXOP sharing group; or an indication of whether or not new members can join the TXOP sharing group.

In some example embodiments, the network device is further configured to: receive, from one network device which is not within the TXOP sharing group, a second request message requesting to join the TXOP sharing group; and transmit, to the one network device, a second response message granting or rejecting to join the TXOP sharing group.

In some example embodiments, the second request message comprises at least one of the following: a TXOP sharing group ID for the one TXOP sharing group which has not been used by other TXOP sharing groups; at least one bit indicating the one network device has at least one terminal device associated with low latency traffic; an indicator associated with a traffic load of the one network device; an information that the one network device is able to operate on non-primary channels; or a channel bandwidth that the one network device operates on.

In some example embodiments, the second response message comprises an ID for the one network device.

In some example embodiments, the network device is further configured to: determine an ID to be used in the TXOP sharing group by one network device which is not within the TXOP sharing group; transmit, to the one network device, the ID to be used in the TXOP sharing group.

In some example embodiments, the network device is further configured to: increase the number of the members currently within the one TXOP sharing group by one in response to another network device joining the TXOP sharing group.

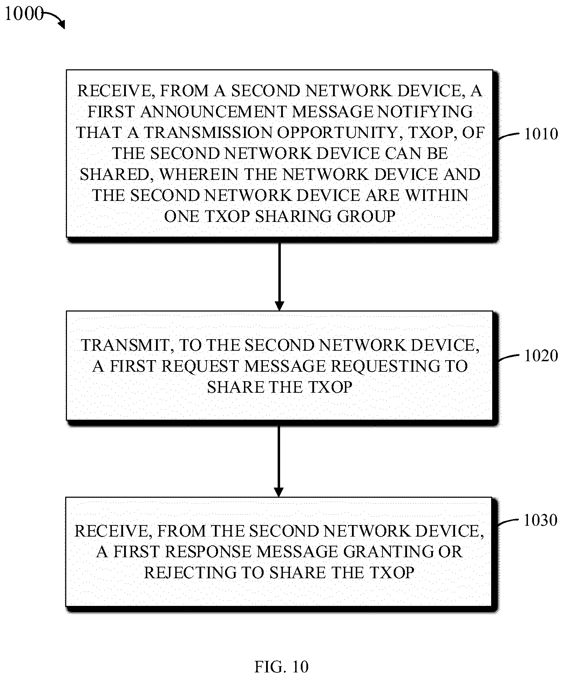

FIG. 10 illustrates a flowchart of an example method implemented at a network device (for example, a network device 102-2, 202-2, 302-2, 502-2, 702-2 or 802-2) in accordance with some embodiments of the present disclosure. For ease of understanding, the method 1000 will be described from the perspective of the network device 202-2 with reference to FIG. 2.

At block 1010, the network device receives, from a second network device, a first announcement message notifying that a transmission opportunity, TXOP, of the second network device can be shared, wherein the network device and the second network device are within one TXOP sharing group. At block 1020, the network device transmits, to the second network device, a first request message requesting to share the TXOP. At block 1030, the network device receives, from the second network device, a first response message granting or rejecting to share the TXOP.

In some example embodiments, in a condition of the network device not being within the TXOP sharing group, the network device transmits, to the second network device, a second request message requesting to join the TXOP sharing group; and receives, from the second network device, a second response message granting or rejecting to join the TXOP sharing group.

In some example embodiments, wherein the network device is further configured to: increase a number of the members currently within the one TXOP sharing group by one if the network device is joining the TXOP sharing group; and transmit, to the second network device, an announcement message comprising the number of the members currently within the one TXOP sharing group.

It should be noted that those embodiments described with reference FIG. 9 also apply for or could be combined with the embodiments described with reference FIG. 10, which are omitted here for brevity.

In some example embodiments, an apparatus (for example, the network device 202-1) capable of performing the method 900 may comprise means for performing the respective steps of the method 900. The means may be implemented in any suitable form. For example, the means may be implemented in a circuitry or software module.

In some example embodiments, the apparatus may comprise means for transmitting, to at least one second network device, a first announcement message notifying that a transmission opportunity, TXOP, of the network device can be shared, wherein the network device and the at least one second network device are within one TXOP sharing group; means for receiving, from the at least one second network device, at least one first request message requesting to share the TXOP; and means for transmitting, to the at least one second network device, at least one first response message granting or rejecting to share the TXOP. In some example embodiments, the apparatus may comprise means for performing other embodiments described with reference to FIG. 9.

In some example embodiments, an apparatus (for example, the network device 202-2) capable of performing the method 1000 may comprise means for performing the respective steps of the method 1000. The means may be implemented in any suitable form. For example, the means may be implemented in a circuitry or software module.

In some example embodiments, the apparatus may comprise means for receiving, from a second network device, a first announcement message notifying that a transmission opportunity, TXOP, of the second network device can be shared, wherein the network device and the second network device are within one TXOP sharing group; means for transmitting, to the second network device, a first request message requesting to share the TXOP; and means for receiving, from the second network device, a first response message granting or rejecting to share the TXOP. In some example embodiments, the apparatus may comprise means for performing other embodiments described with reference to FIG. 10.

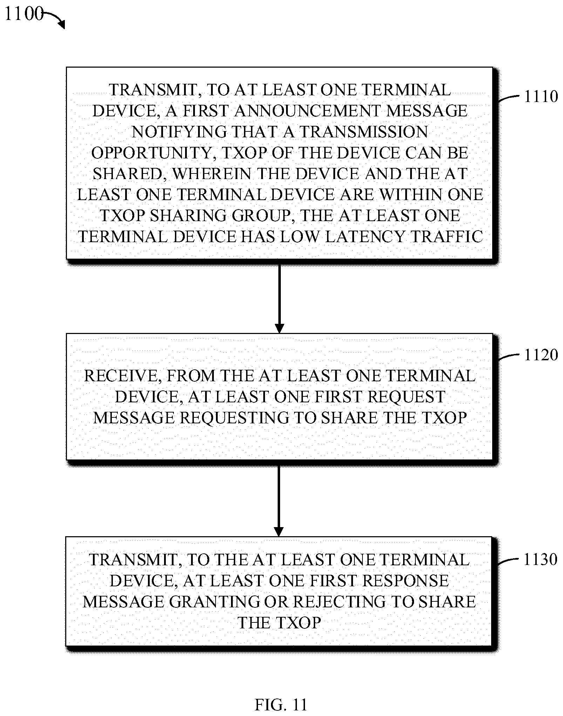

FIG. 11 illustrates a flowchart of an example method 1100 implemented at a device (for example, a network device 102-1, 202-1, 302-1, 502-1, 602-1, 702-1 or 802-1 or a terminal device 104-1 or 104-2) in accordance with some embodiments of the present disclosure. For ease of understanding, the method 1100 will be described from the perspective of the network device 602-1 with reference to FIG. 6.

At block 1110, the device transmits, to at least one terminal device, a first announcement message notifying that a transmission opportunity, TXOP of the device can be shared, wherein the device and the at least one terminal device are within one TXOP sharing group, the at least one terminal device has low latency traffic. At block 1120, the device receives, from the at least one terminal device, at least one first request message requesting to share the TXOP. At block 1130, the device transmits, to the at least one terminal device, at least one first response message granting or rejecting to share the TXOP.

In some example embodiments, the first announcement message is included in a first multi-user request to send, MU-RTS, transmission frame, the first request message is included in a multi-user clear to send, MU-CTS, frame, and the first response message is included in a second MU-RTS transmission frame.

In some example embodiments, the first announcement message carries at least one identity, ID, of the at least one terminal device, wherein each terminal device of the at least one terminal device has a separate ID within the one TXOP sharing group.

In some example embodiments, the device is configured to grant to one of the at least one terminal device to share the TXOP, and the first response message comprises an ID of the one terminal device.

In some example embodiments, the device is configured to grant to a plurality of terminal devices of the at least one terminal device to share the TXOP, the device is further configured to: allocate a part of a frequency bandwidth or a part of a time duration of the TXOP to the one terminal device.

In some example embodiments, the first announcement message comprises at least one of the following: a frame type information element indicating TXOP sharing; a TXOP sharing type information element indicating the first announcement message is used for notifying that the TXOP of the device can be shared; or at least one ID of the at least one terminal device, the at least one ID being followed by a resource unit, RU, allocation information element and an allocation duration information element.

In some example embodiments, each of the at least one first request message comprises at least one of the following: a frame type information element indicating TXOP sharing; a TXOP sharing type information element indicating the first request message is used for requesting to share the TXOP; an ID of the device; at least one bit indicating a presence of low latency traffic; or a buffer status report.

In some example embodiments, each of the at least one first response message comprises at least one of the following: a frame type information element indicating TXOP sharing; a TXOP sharing type information element indicating the first response message is used for granting or rejecting to share the TXOP; or at least one ID of the at least one terminal device, the at least one ID is followed by a resource unit, RU, allocation information element and an allocation duration information element.

In some example embodiments, the device is further configured to: determine to start the one TXOP sharing group; and select a TXOP sharing group ID, which has not been used by other TXOP sharing groups, for the one TXOP sharing group.

In some example embodiments, the device is further configured to: receive, from one terminal device which is not within the TXOP sharing group and has a capability to transmit low latency traffic, a second request message requesting to join the TXOP sharing group, wherein the one terminal device can participate in sharing the TXOP and join the one TXOP sharing group explicitly; and transmit, to the one terminal device, a second response message granting or rejecting to join the TXOP sharing group.

In some example embodiments, the second request message comprises at least one of the following: a TXOP sharing group ID for the one TXOP sharing group which has not been used by other TXOP sharing groups; at least one bit indicating the one terminal device has low latency traffic; an indicator associated with a traffic load of the one terminal device;
an information that the one terminal device is able to operate on non-primary channels; or a channel bandwidth that the one terminal device operates on.

In some example embodiments, the second response message comprises an ID for the one terminal device.

In some example embodiments, the device is further configured to: determine an ID to be used in the TXOP sharing group by one terminal device which is not within the TXOP sharing group and has low latency traffic; transmit, to the one terminal device, the ID to be used in the TXOP sharing group.

In some example embodiments, the device is further configured to: increase a number of the members currently within the one TXOP sharing group by one in response to another device joining the TXOP sharing group.

In some example embodiments, the at least one first request message is transmitted in response to at least one ID selected by the at least one terminal device from a plurality of IDs reserved for devices with low latency traffic being the same as at least one ID carried by the first announcement message.

In some example embodiments, the device is a network device or a terminal device.

It should be noted that those embodiments described with reference FIG. 9 or FIG. 10 also apply for or could be combined with the embodiments described with reference FIG. 11, which are omitted here for brevity.

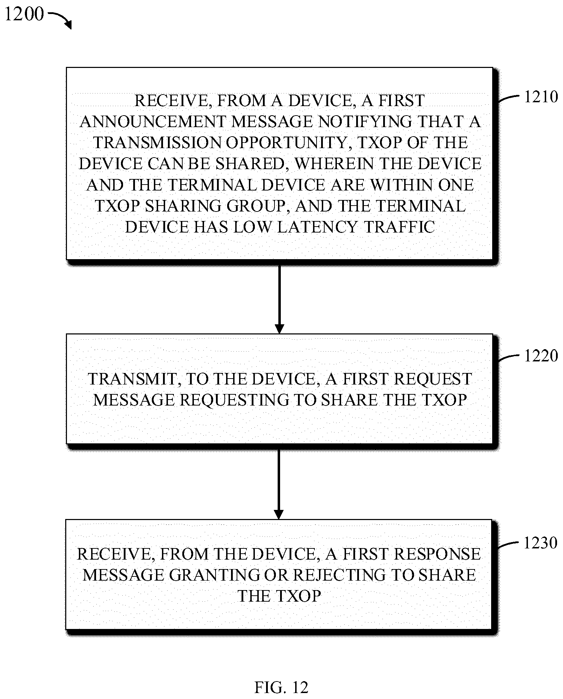

FIG. 12 illustrates a flowchart of an example method 1200 implemented at a terminal device (for example, a terminal device 104-1, 104-2, 604-2, 704-2 or 804-2) in accordance with some embodiments of the present disclosure. For ease of understanding, the method 1200 will be described from the perspective of the terminal device 604-2 with reference to FIG. 6.

At block 1210, the terminal device receives, from a device, a first announcement message notifying that a transmission opportunity, TXOP of the device can be shared, wherein the device and the terminal device are within one TXOP sharing group, and the terminal device has low latency traffic. At block 1220, the terminal device transmits, to the device, a first request message requesting to share the TXOP. At block 1230, the terminal device receives, from the device, a first response message granting or rejecting to share the TXOP.

In some example embodiments, the first announcement message is included in a first multi-user request to send (MU-RTS) transmission frame, the first request message is included in a multi-user clear to send (MU-CTS) frame, and the first response message is included in a second MU-RTS transmission frame.

In some example embodiments, the first request message comprises at least one of the following: a frame type information element indicating TXOP sharing; a TXOP sharing type information element indicating the first request message is used for requesting to share the TXOP; an ID of the first network device; at least one bit indicating a presence of low latency traffic; or a buffer status report.

In some example embodiments, the terminal device is further configured to: receive, from the device, a second announcement message notifying existence of the one TXOP sharing group.

In some example embodiments, the terminal device is further configured to: in a condition of the terminal device not being within the TXOP sharing group, and the terminal device being able to participate in sharing the TXOP and join the one TXOP sharing group explicitly, transmit, to the device, a second request message requesting to join the TXOP sharing group; and receive, from the device, a second response message granting or rejecting to join the TXOP sharing group.

In some example embodiments, the terminal device is further configured to: increase a number of the members currently within the one TXOP sharing group by one if the terminal device is joining the TXOP sharing group; and transmit, to the device, an announcement message comprising the number of the members currently within the one TXOP sharing group.

It should be noted that those embodiments described with reference FIG. 11 also apply for or could be combined with the embodiments described with reference FIG. 12, which are omitted here for brevity.

In some example embodiments, an apparatus (for example, the network device 602-1) capable of performing the method 1100 may comprise means for performing the respective steps of the method 1100. The means may be implemented in any suitable form. For example, the means may be implemented in a circuitry or software module.

In some example embodiments, the apparatus may comprise means for transmitting, to at least one terminal device, a first announcement message notifying that a transmission opportunity, TXOP of the device can be shared, wherein the device and the at least one terminal device are within one TXOP sharing group, the at least one terminal device has low latency traffic; means for receiving, from the at least one terminal device, at least one first request message requesting to share the TXOP; and means for transmitting, to the at least one terminal device, at least one first response message granting or rejecting to share the TXOP. In some example embodiments, the apparatus may comprise means for performing other embodiments described with reference to FIG. 11.

In some example embodiments, an apparatus (for example, the terminal device 604-2) capable of performing the method 1200 may comprise means for performing the respective steps of the method 1200. The means may be implemented in any suitable form. For example, the means may be implemented in a circuitry or software module.

In some example embodiments, the apparatus may comprise means for receiving, from a device, a first announcement message notifying that a transmission opportunity, TXOP of the device can be shared, wherein the device and the terminal device are within one TXOP sharing group, and the terminal device has low latency traffic; means for transmitting, to the device, a first request message requesting to share the TXOP; and means for receiving, from the device, a first response message granting or rejecting to share the TXOP. In some example embodiments, the apparatus may comprise means for performing other embodiments described with reference to FIG. 12.

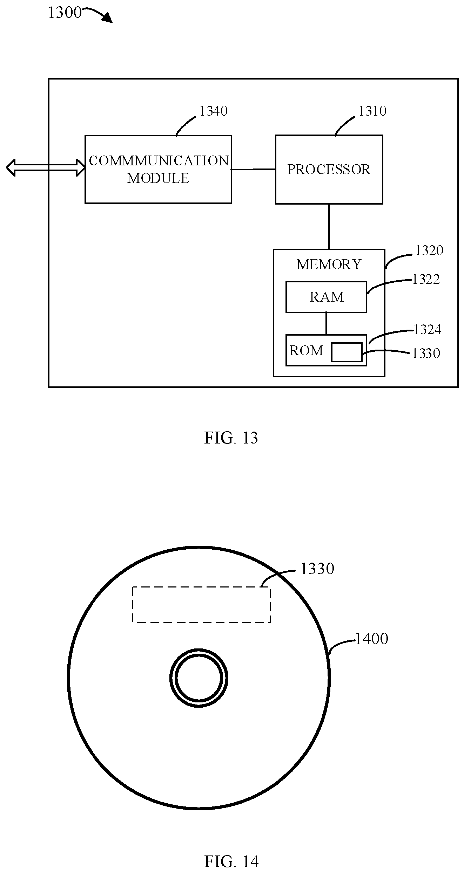

FIG. 13 illustrates an example simplified block diagram of a device 1300 that is suitable for implementing embodiments of the present disclosure. The device 1300 may be provided to implement a communication device or a network element, for example, the terminal device 104, 604, 704, 804, or the network device 102, 202, 302, 502, 602, 702, 802 as shown in FIGS 1-3 to FIGS 5-8. As shown, the device 1300 includes one or more processors 1310, one or more memories 1320 may couple to the processor 1310, and one or more communication modules 1340 may couple to the processor 1310.

The communication module 1340 is for bidirectional communications. The communication module 1340 has at least one antenna to facilitate communication. The communication interface may represent any interface that is necessary for communication with other network elements, for example the communication interface may be wireless or wireline to other network elements, or software based interface for communication.

The processor 1310 may be of any type suitable to the local technical network and may include one or more of the following: general purpose computers, special purpose computers, microprocessors, digital signal processors (DSPs) and processors based on multicore processor architecture, as non-limiting examples. The device 1300 may have multiple processors, such as an application specific integrated circuit chip that is slaved in time to a clock which synchronizes the main processor.

The memory 1320 may include one or more non-volatile memories and one or more volatile memories. Examples of the non-volatile memories include, but are not limited to, a read only memory (ROM) 1324, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 1322 and other volatile memories that will not last in the power-down duration. The memory 1320 may store instructions that, when executed by the processor 1310, cause the apparatus 1300 to perform any of the methods as disclosed herein.

A computer program 1330 includes computer executable instructions that are executed by the associated processor 1310. The program 1330 may be stored in the ROM 1324. The processor 1310 may perform any suitable actions and processing by loading the program 1330 into the RAM 1322.

The embodiments of the present disclosure may be implemented by means of the program so that the device 1300 may perform any process of the disclosure as discussed with reference to FIG. 1 to FIG. 12. The embodiments of the present disclosure may also be implemented by hardware or by a combination of software and hardware.

In some example embodiments, the program 1330 may be tangibly contained in a computer readable medium which may be included in the device 1300 (such as in the memory 1320) or other storage devices that are accessible by the device 1300. The device 1300 may load the program 1330 from the computer readable medium to the RAM 1322 for execution. The computer readable medium may include any types of tangible non-volatile storage, such as ROM, EPROM, a flash memory, a hard disk, CD, DVD, and the like. FIG. 14 shows an example of the computer readable medium 1400 in form of CD or DVD. The computer readable medium has the program 1330 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the methods 200, 300 and 500 to 1200 as described above with reference to FIG. 2, FIG. 3 and FIG. 5 to FIG. 12. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A network device comprising:
at least one processor; and
at least one memory storing instructions that, when executed by the at least one processor, cause the network device at least to:
transmit, to at least one second network device, a first announcement message notifying that a transmission opportunity, TXOP, of the network device can be shared, wherein the network device and the at least one second network device are within one TXOP sharing group;
receive, from the at least one second network device, at least one first request message requesting to share the TXOP; and
transmit, to the at least one second network device, at least one first response message granting or rejecting to share the TXOP.

2. The network device of claim 1, wherein each of the first announcement message, the first request message and the first response message is included in a control frame or action frame.

3. The network device of claim 1 or 2, wherein the first announcement message is included in a first multi-user request to send, MU-RTS, transmission frame, the first request message is included in a multi-user clear to send, MU-CTS, frame, and the first response message is included in a second MU-RTS transmission frame.

4. The network device of any of claims 1 to 3, wherein the first announcement message carries at least one identity, ID, of the at least one second network device, wherein each second network device of the at least one second network device has a separate ID within the one TXOP sharing group.

5. The network device of any of claims 1 to 4, wherein the network device is configured to grant to one of the at least second network device to share the TXOP, and the first response message comprises an ID of the one second network device.

6. The network device of any of claims 1 to 4, wherein the network device is configured to grant to a plurality of the at least one second network device to share the TXOP, the network device is further configured to:
allocate a part of a frequency bandwidth or a part of a time duration of the TXOP to one of the plurality of the at least one second network device.

7. The network device of any of claims 1 to 3, wherein
the first announcement message comprises at least one of the following:
a frame type information element indicating TXOP sharing;
a TXOP sharing type information element indicating the first announcement message is used for notifying that the TXOP of the network device can be shared; or
at least one ID of the at least one second network device, the at least one ID being followed by a resource unit, RU, allocation information element and an allocation duration information element;
each of the at least one first request message comprises at least one of the following:
a frame type information element indicating TXOP sharing;
a TXOP sharing type information element indicating the first request message is used for requesting to share the TXOP;
an ID of the network device;
at least one bit indicating a presence of low latency traffic; or
a buffer status report; and
each of the at least one first response message comprises at least one of the following:
a frame type information element indicating TXOP sharing;
a TXOP sharing type information element indicating the first response message is used for granting or rejecting to share the TXOP; or
at least one ID of the at least one second network device, each of the at least one ID is followed by a resource unit, RU, allocation information element and an allocation duration information element.

8. The network device of any of claims 1 to 7, wherein the network device is further configured to:
determine to start the one TXOP sharing group; and
select a TXOP sharing group ID, which has not been used by other TXOP sharing groups, for the one TXOP sharing group.

9. The network device of any of claims 1 to 8, wherein the network device is further configured to:
broadcast a second announcement message notifying existence of the one TXOP sharing group.

10. The network device of claim 9, wherein the second announcement message comprises at least one of the following:
a TXOP sharing group ID for the one TXOP sharing group which has not been used by other TXOP sharing groups;
a number of members currently within the one TXOP sharing group;
at least one ID of at least one member currently within the one TXOP sharing group; or
an indication of whether or not new members can join the TXOP sharing group.

11. The network device of claim 10, wherein the network device is further configured to:
increase the number of the members currently within the one TXOP sharing group by one in response to another network device joining the TXOP sharing group.

12. A network device comprising:
at least one processor; and
at least one memory storing instructions that, when executed by the at least one processor, cause the network device at least to:
receive, from a second network device, a first announcement message notifying that a transmission opportunity, TXOP, of the second network device can be shared, wherein the network device and the second network device are within one TXOP sharing group;
transmit, to the second network device, a first request message requesting to share the TXOP; and
receive, from the second network device, a first response message granting or rejecting to share the TXOP.

13. A method comprising:
transmitting, to at least one second network device, a first announcement message notifying that a transmission opportunity, TXOP, of the network device can be shared, wherein the network device and the at least one second network device are within one TXOP sharing group;
receiving, from the at least one second network device, at least one first request message requesting to share the TXOP; and
transmitting, to the at least one second network device, at least one first response message granting or rejecting to share the TXOP.

14. A method comprising:
receiving, from a second network device, a first announcement message notifying that a transmission opportunity, TXOP, of the second network device can be shared, wherein the network device and the second network device are within one TXOP sharing group;
transmitting, to the second network device, a first request message requesting to share the TXOP; and
receiving, from the second network device, a first response message granting or rejecting to share the TXOP.

15. A non-transitory computer readable medium comprising program instructions stored thereon for performing the method of claim 13 or 14.
